# EUROPÄISCHE PATENTANMELDUNG

(11) **EP 1 621 864 A2**
(43) Veröffentlichungstag der Anmeldung: **01.02.2006**
(21) Anmeldenummer: 05106558.9
(22) Anmeldetag: 18.07.2005
(51) Int. Cl.: G01N 1/20

(54) **Probenahmearmatur**

(30) Priorität: 29.07.2004 DE 102004036914
(71) Anmelder: Behrens, Bruno, 60528 Frankfurt/Main (DE)
(72) Erfinder: Behrens, Bruno, 60528 Frankfurt/Main (DE)
(74) Vertreter: Patentanwälte Freischem

(57) **Zusammenfassung**

Die Erfindung betrifft eine Probenahmevorrichtung, welche an einem fluidführenden Rohr (2) angeordnet ist und einen beweglichen Absperrkörper (12) aufweist, der in einer ersten Stellung das Rohr (2) dicht verschließt und in einer zweiten Stellung das Ausströmen von Fluid aus dem Rohr (2) durch eine Ausströmöffnung ermöglicht.

Aufgabe der Erfindung ist es, eine Probenahmevorrichtung zu schaffen, die von einem Molch durchlaufen werden kann.

Diese Aufgabe wird dadurch gelöst, daß eine dem Innenraum (8) des Rohres (2) zugewandte Stirnfläche (23) des Absperrkörpers (12) in der Schließstellung mit der angrenzenden Oberfläche des Rohres (2) bündig verläuft.

## Beschreibung

### Technisches Gebiet

Die Erfindung betrifft eine Probenahmevorrichtung, welche an einem fluidführenden Rohr angeordnet ist und einen axial beweglichen Absperrkörper aufweist, der in einer ersten Stellung das Rohr dicht verschließt und in einer zweiten Stellung das Ausströmen von Fluid aus dem Rohr durch eine Ausströmöffnung ermöglicht.

### Stand der Technik

Derartige Probenahmearmaturen sind in verschiedenen Ausführungsformen bekannt. Diskontinuierliche Probenahmesysteme erlauben beispielsweise das Auslassen eines definierten Volumens aus einem Rohrinnenraum. Hierzu ist ein Absperrkörper, z.B. in Form eines drehbaren Kugelkükens zwischen dem Rohrinnenraum und der Ausströmöffnung vorgesehen. Das Kugelküken weist eine Sacklochbohrung auf. Wenn deren Mündung zum Rohrinnenraum weist, füllt sich die Sacklochbohrung mit dem Fluid. Wenn das Kugelküken gedreht wird, so daß die Mündung der Sacklochbohrung zur Ausströmöffnung weist, entleert sich der Inhalt der Sacklochbohrung durch die Ausströmöffnung.

Der Vorteil dieses Probenahmesystems liegt darin, daß zu keiner Zeit ein offener Strömungsquerschnitt von dem Rohrinnenraum zu der Ausströmöffnung gebildet ist. So wird vermieden, daß eine unzulässig große Menge des Fluids durch die Ausströmöffnung ausströmt, beispielsweise wenn vergessen wird, die Entnahmevorrichtung rechtzeitig zu schließen.

Nachteilig ist bei diesem System, daß die Sacklochbohrung einen Totraum bildet. Gerade im Fall von Lebensmittelleitungen kann sich hier Fluid absetzen und altern. Schließlich ragt meist eine Kugelkappe des Kükens in die Rohrleitung, so daß das Hindurchführen eines Molches problematisch ist. Ein Molch ist ein Laufkörper, der eine Rohrleitung mittels eines Laufkörpers durchfährt, um im Inneren dieser Rohrleitung bestimmte Tätigkeiten durchzuführen. Diese Tätigkeiten umfassen insbesondere das Hinausschieben eines Rohrinhaltes um das Produkt nahezu vollständig aus der Rohrleitung zu entfernen.

Ferner sind kontinuierliche Probenahmesysteme bekannt, bei denen durch einen Absperrkörper ein Strömungsquerschnitt zwischen dem Rohrinnenraum und der Ausströmöffnung geöffnet werden kann. Der Absperrkörper kann wieder als Kugelküken ausgebildet sein. Hier besteht aufgrund des offenen Strömungsquerschnitts die Gefahr, daß eine zu große Probenmenge entnommen wird. Aus diesem Grund sind zusätzlich Totmannschalter vorzusehen, die die Armatur schließen, wenn keine öffnende Kraft auf das Betätigungsmittel ausgeübt wird. Auch sind die kontinuierlichen Probenehmer nicht immer totraumfrei und weisen Teile auf, die in den Rohrquerschnitt hineinragen, so daß das betroffene Rohr nicht molchbar ist.

Die Druckschrift DE 297 03 522 U1 zeigt eine Probenahmearmatur, mit den eingangs beschriebenen Merkmalen. Hier ist ein in das Rohr ragendes Stellglied mit dem im Rohr befindlichen Absperrkörper angeordnet. Ein Dichtsitz für den Absperrkörper ist in einem konvex geformten Gehäuseabschnitt angeordnet. Somit ist der von der Rohrströmung durchströmte Querschnitt im Bereich des Absperrkörpers unrund und kann ferner aufgrund des in dem Querschnitt angeordneten Absperrkörper nicht von einem Molch durchlaufen werden.

### Offenbarung der Erfindung

Aufgabe der Erfindung ist es, eine Probenahmevorrichtung zu schaffen, die von einem Molch durchlaufen werden kann.

Diese Aufgabe wird erfindungsgemäß dadurch gelöst, daß eine dem Innenraum des Rohres zugewandte Stirnfläche des Absperrkörpers in dessen Schließstellung mit der angrenzenden Oberfläche des Rohres bündig verläuft.

Um molchbar zu sein, schließt gemäß der Erfindung die dem Innenraum zugewandte Oberfläche des Absperrkörpers in dessen Schließstellung bündig mit der angrenzenden Oberfläche des Rohres ab. Der Absperrkörper und alle Teile zur Betätigung des Absperrkörpers befinden sich außerhalb des Rohrquerschnitts, so daß ein Molch problemlos den Bereich des Absperrkörpers durchlaufen kann. Der Absperrkörper ist in der Praxis als rotationssymmetrisches Bauteil ausgebildet und wird nachfolgend auch als Spindel bezeichnet. Die Stirnfläche des Absperrkörpers ist bei der genannten praktischen Ausführungsform als konkaver Abschnitt einer Zylindermantelfläche ausgebildet. Wenn der Absperrkörper in der Schließstellung liegt, verläuft diese Zylindermantelfläche bündig zu dem angrenzenden zylindrischen Rohrquerschnitt. Das Hindurchlaufen eines Molches durch den Rohrquerschnitt im Bereich des Absperrkörpers ist in keiner Weise gestört, solange keine Probe entnommen wird.

In der Praxis erstreckt sich der Absperrkörper nur auf einer Seite des Rohrquerschnitts, d.h. es befindet sich nur eine Öffnung in der Rohrwandung, die gegenüber der Umgebung abzudichten ist. Hierdurch ist die Gefahr von Leckagen gegenüber bekannten Vorrichtungen reduziert. Bei bekannten Vorrichtungen weist der Absperrkörper eine Welle auf, die sich durch das Rohr radial hindurch erstreckt und somit an zwei einander diametral gegenüberliegenden Stellen gegenüber der Umgebung abzudichten ist. Bei den bekannten Vorrichtungen mit zwei Dichtungen ist das Leckagerisiko also doppelt so groß wie bei der erfindungsgemäßen Vorrichtung mit nur einer Dichtung.

Vorzugsweise ist der Absperrkörper axial beweglich und mindestens eine Feder drückt den Absperrkörper in eine Schließstellung, in der er eine Dichtung in einen Dichtsitz drückt. Der Dichtsitz liegt dabei vorzugsweise von der Rohrmitte aus gesehen außerhalb des Rohrquerschnitts, um diesen für den Durchgang eines Molches vollständig offen zu halten. Der Absperrkörper kann mittels eines Betätigungsmittels axial von dem Dichtsitz weg in eine Öffnungsstellung beweglich sein, in der er von dem Dichtsitz abgehoben ist.

Mit anderen Worten wird der Absperrkörper, anders als bei üblichen Hähnen, nicht durch Drehen, sondern durch axiales Verschieben von der Schließ- in die Öffnungsstellung bewegt. Dabei ist eine Feder vorgesehen, die den Absperrkörper in Abwesenheit anderer Kräfte grundsätzlich in einen Dichtsitz drückt. Die Federkraft wird bei einem Überdruck im Innenraum des Rohres durch die Druckkraft verstärkt und dichtet die Dichtung zuverlässig gegen den Dichtsitz ab. Zum Öffnen des Absperrkörpers muß mittels eines Betätigungsmittels eine Kraft aufgebracht werden, welche den Absperrkörper von dem Dichtsitz weg bewegt. Sobald die Öffnungskraft nachläßt, wird der Absperrkörper durch die Federkraft und ggf. durch den Druck im Rohrinnenraum unverzüglich in die Schließstellung bewegt. Somit weist die erfindungsgemäße Vorrichtung eine automatische Totmann-Funktion auf. Die Feder und die Betätigungsmittel sind von der Rohrmitte aus gesehen radial außerhalb des Rohrquerschnittes bzw. radial hinter der Stirnfläche des Absperrkörpers angeordnet, um zu gewährleisten, daß der gesamte Rohrquerschnitt frei ist, wenn der Absperrkörper sich in Schließstellung befindet.

Bei spielfreier Führung des Absperrkörpers in seiner Aufnahme an dem Rohr kann der axial bewegliche Absperrkörper ohne jeglichen Totraum und ohne in den Rohrinnenraum ragende Vorsprünge ausgebildet werden. Er ist dadurch für Lebensmittel und andere verderbliche Güter führende Rohrleitungen geeignet und erforderlichenfalls molchbar.

In der Praxis kann das Betätigungsmittel von mindestens einem, sich quer zum Absperrkörper erstreckenden Arm gebildet werden, der auf einer schräg zur radialen Ebene des Absperrkörpers verlaufenden Rampenfläche geführt ist. Zwei Endanschläge können die Bewegung des Arms begrenzen. Vorzugsweise werden zwei, drei oder vier radiale Arme an dem Absperrkörper befestigt, welche in regelmäßigen Winkelabständen über den Umfang des Absperrkörpers verteilt sind. Die Rampenflächen werden von schrägen Langlöchern in dem Mantel einer Hülse gebildet, welche den Absperrkörper umgibt und von den Armen durchragt wird.

Wie erwähnt, verläuft die Rampenfläche schräg zur radialen Ebene, d.h. sie hat einen größten Abstand zur Rohrachse und einen kleinsten Abstand zur Rohrachse. Die Feder bewegt den Absperrkörper von der Rohrachse weg in die Schließstellung und drückt somit die mit der Hülse verbundenen Arme in Richtung des größten Abstandes auf der Rampenfläche. Durch manuelles Verdrehen der Arme laufen diese auf den genannten Rampenflächen derart, daß sie den Absperrkörper zur Rohrachse hin in die Öffnungsstellung bewegen. Dabei hebt die Dichtung von dem Dichtsitz ab und gibt einen zur Ausströmöffnung führenden Strömungsquerschnitt frei, der sofort von Fluid in dem Rohr durchströmt wird. Da der Absperrkörper in der Dichtstellung im wesentlichen spielfrei in seinem Dichtsitz gehalten ist, ist das ausströmende Fluid immer frisch und kann sich in keinem Totraum ablagern.

Sobald der Betätigungsarm losgelassen wird, drückt die Feder den Absperrkörper in axialer Richtung in die Schließstellung und die Arme laufen entlang der Rampenfläche in die von der Rohrachse entfernte Position.

Dabei ist die Feder in einer praktischen Ausführungsform mindestens eine Tellerfeder, die axial auf den Absperrkörper wirkt. In der Praxis kann ein Federpaket mit z.B. sechs Tellerfedern verwendet werden. Beispielsweise kann der Absperrkörper von einer Druckbuchse umgeben werden, gegen deren Stirnfläche sich ein Paket von Tellerfedern abstützt. Die Druckbuchse stützt sich auf der gegenüberliegenden Seite gegen ein Gehäuse zur Aufnahme des Absperrkörpers. In dem Gehäuse ist der Dichtungssitz und die radial zur Rohrachse verlaufende Bohrung, durch welche sich der Absperrkörper erstreckt, angeordnet. Die Federkraft der Tellerfedern drückt den Absperrkörper in seinen Dichtsitz.

In der Praxis wird die Ausströmöffnung in dem Absperrkörper durch eine Mündung einer axialen Bohrung gebildet. Die axiale Bohrung kann in eine Querbohrung münden, welche ihrerseits an der Umfangsfläche des Absperrkörpers mündet. Diese Querbohrung ermöglicht das Hindurchtreten des Fluids aus dem Rohrinnenraum. Eine Dichtung ist zwischen der Mündung der Querbohrung und der dem Rohrinnenraum zugewandten Oberfläche des Absperrkörpers an dessen Umfangsfläche anzuordnen.

Es ist dafür Sorge zu tragen, daß die axiale Bewegung des Absperrkörpers die Dichtung gegen den Dichtsitz preßt. Aus diesem Grund weist der Absperrkörper bevorzugt eine schräg verlaufende Umfangsfläche im Bereich der Dichtung auf. Die Umfangsfläche ist vorzugsweise konisch ausgebildet. Der Dichtsitz hat eine komplementäre konische Innenfläche. Die Federkraft drückt den Absperrkörper mit der Dichtung in den konischen Dichtsitz und verhindert so ein Ausströmen von Medium aus dem Rohrinnenraum. Vorzugsweise liegt der Absperrkörper im wesentlichen spielfrei mit seiner konischen Umfangsfläche in dem Dichtsitz. Durch die axiale Öffnungsbewegung wird die konische Umfangsfläche von dem Dichtsitz entfernt. Wenn sich die Dichtung elastisch vollständig entspannt hat, öffnet sich zwischen der Dichtung und dem Dichtsitz ein Strömungsquerschnitt, der das Ausströmen des Fluids ermöglicht.

Vorzugsweise sind weitere Dichtungen an dem spindelartigen Absperrkörper auf der vom Rohrinnenraum abgewandten Seite in bezug auf die Mündung der Querbohrung angeordnet. Diese Dichtungen stellen sicher, daß Fluid aus dem Rohrinnenraum ausschließlich durch die Querbohrung und die axiale Bohrung austritt und nicht entlang der Außenfläche des Absperrkörpers nach außen fließt.

Ähnlich dem Stand der Technik ist im Bereich der Ausströmöffnung bei einer praktischen Ausführungsform ein Gewinde vorgesehen, auf welches ein komplementärer Gewindeabschnitt eines Entnahmebehälters aufgeschraubt werden kann.

### Kurze Beschreibung der Zeichnungen

Nachfolgend wird eine praktische Ausführungsform der Erfindung unter Bezugnahme auf die beigefügten Zeichnungen beschrieben. Die Zeichnungen zeigen in:
- Fig. 1: eine auf der linken Seite teilgeschnittene Vorderansicht in Durchströmrichtung der erfindungsgemäßen Armatur,
- Fig. 2: eine auf der linken Seite teilgeschnittene Unteransicht eines Drehgehäuses der Armatur aus Fig. 1,
- Fig. 3: eine teilgeschnittene Seitenansicht des Drehgehäuses aus Fig. 2,
- Fig. 4: eine halbe Vorderansicht des in dieser Ansicht rotationssymmetrischen Flanschgehäuses der erfindungsgemäßen Armatur,
- Fig. 5: eine teilgeschnittene Seitenansicht des Flanschgehäuses aus Fig. 4,
- Fig. 6: eine Unteransicht des Flanschgehäuses aus Fig. 4 und 5 und
- Fig. 7: eine mittlere Querschnittsansicht des Flanschgehäuses aus Fig. 4-6.

### Ausführungsform(en) der Erfindung

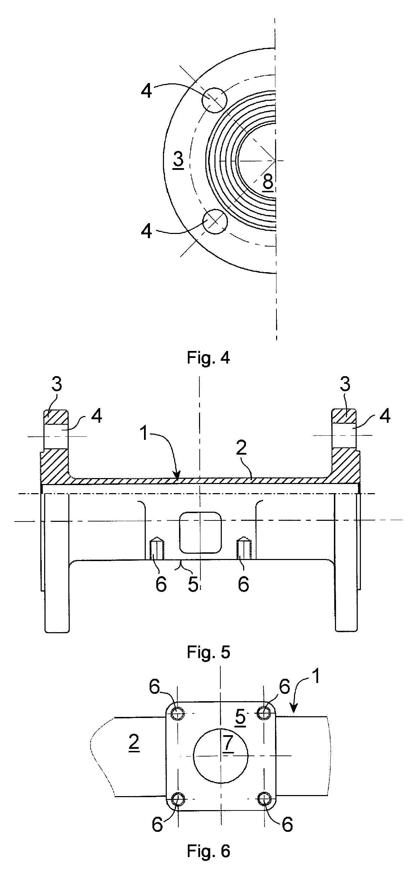

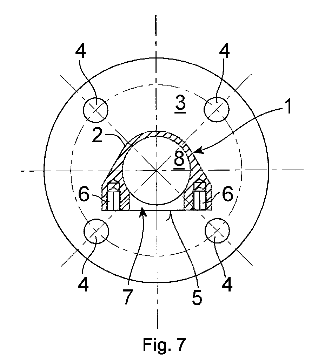

Zur Verdeutlichung der Erfindung wird zunächst auf das Flanschgehäuse 1 der Fig. 4 - 7 eingegangen. Das Flanschgehäuse 1 besteht aus einem geraden, kreisrunden Rohrabschnitt 2, der von einem Fluid durchströmt wird. An jedem der beiden axialen Enden des Rohrabschnitts 2 ist ein Anschlußflansch 3 mit Schraublöchern 4 angeformt. Über jeden Anschlußflansch 3 kann das Flanschgehäuse 1 an einen entsprechenden Flansch eines Rohrleitungssystems angeschlossen werden, so daß der Rohrabschnitt 2 einen Teil eines fluiddurchströmten Rohres bildet.

In der Mitte des Flanschgehäuses 1 ist eine nach unten gerichtete Flanschfläche 5 angeordnet. Die Flanschfläche 5 ist gemäß der in Fig. 6 dargestellten Unteransicht im wesentlichen quadratisch ausgebildet und weist in jeder Ecke eine Gewindebohrung 6 auf. In der Mitte der Flanschfläche 5 ist eine Öffnung 7 angeordnet, welche radial zur Achse des Rohrabschnitts 2 verläuft und in dem Innenraum 8 des Rohrabschnitts 2 mündet.

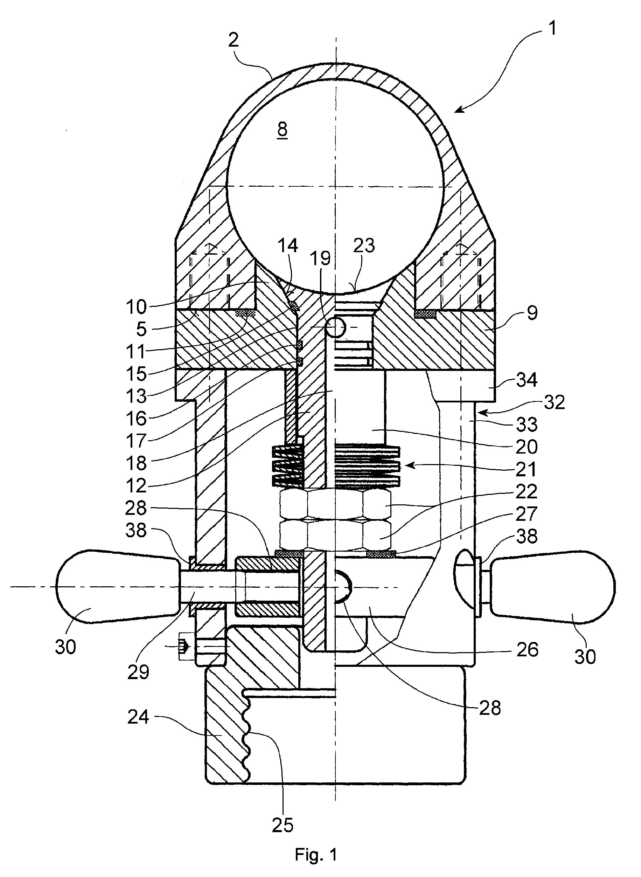

An der Flanschfläche 5 ist durch in die Gewindebohrung 6 eingreifende Befestigungsschrauben die erfindungsgemäße Armatur befestigt, welche in der Fig. 1 zu erkennen ist. Dabei ist an der Flanschfläche 5 ein plattenförmiges Bauteil festgeschraubt, welches nachfolgend Spindelgehäuse 9 genannt wird. Das Spindelgehäuse 9 weist einen Vorsprung 10 mit rundem Querschnitt auf, der in die Öffnung 7 im Bereich der Flanschfläche 5 hineinragt. Das Spindelgehäuse 9 ist durch einen Dichtring 11 gegenüber der Flanschfläche 5 abgedichtet.

In dem Spindelgehäuse 9 ist der erfindungsgemäße Absperrkörper aufgenommen, der nachfolgend als Spindel 12 bezeichnet wird. Der Absperrkörper oder die Spindel 12 ist im wesentlichen als längliches rotationssymmetrisches Bauteil ausgebildet und durchragt eine Bohrung 13 in dem Spindelgehäuse 9. Die Bohrung 13 mündet über einen kegeligen Dichtsitz 14 in den Innenraum 8 des Rohrabschnitts 2 des Flanschgehäuses 1. Der Dichtsitz 14 liegt außerhalb des kreisförmigen Querschnitts des Rohrabschnitts 2. Das obere Ende der Spindel 12 ist komplementär zum Verlauf der Bohrung 13 in dem Spindelgehäuse 9 konisch ausgebildet. Die Spindel 12 ist ferner über drei Dichtringe 15,16,17 gegenüber der Bohrung 13 im Spindelgehäuse 9 abgedichtet.

Die Spindel 12 wird von einer axialen Bohrung 18 durchragt, welche einige Millimeter vor der oberen Stirnfläche der Spindel 12 endet. Am oberen Ende der axialen Bohrung 18 geht diese in eine radiale Querbohrung 19 über. Die Querbohrung 19 mündet zwischen dem obersten Dichtring 15 und den zwei darunter liegenden Dichtringen 16,17 am Umfang der Spindel 12.

Die Spindel 12 stützt sich über eine Druckbuchse 20, welche von einer einfachen, die Spindel 12 mit geringem Spiel umgebenden Metallhülse gebildet ist, und über einen Satz mit sechs Tellerfedern 21 gegenüber dem Spindelgehäuse 9 ab. Zwei Sechskantmuttern 22 bringen eine Vorspannkraft auf das Tellerfederpaket 21 auf. Die Tellerfedern 21 drücken das untere Ende der Spindel 18 somit von dem Spindelgehäuse 9 weg, so daß das obere Ende der Spindel 18 in den kegelförmigen Dichtsitz 14 des Spindelgehäuses 9 gedrückt wird. Durch den Druck der Tellerfedern 21 dichtet der Dichtring 15 somit die Mündung der Querbohrung 19 gegenüber dem Innenraum 8 des Rohres ab. Die obere Stirnfläche 23 der Spindel 12 ist als kreisförmiger Abschnitt einer konkaven Zylindermantelfläche ausgebildet und fügt sich bündig in die Innenfläche des Rohrabschnitts 2 des Flanschgehäuses 1 ein. Bei geschlossener Probenahmearmatur, wenn das Federpaket 21 den Dichtring 15 in seinen Sitz 14 drückt, ragen keinerlei Vorsprünge der Probenahmearmatur in den kreisförmigen Querschnitt des Innenraums 8 des Rohrabschnitts 2. Es ist somit ohne weiteres möglich, einen Molch durch den Rohrabschnitt 2 hindurchlaufen zu lassen.

Um Fluid aus dem Innenraum 8 durch die Querbohrung 19 und die axiale Bohrung 18 nach unten strömen zu lassen, muß der durch die Spindel 12 gebildete Absperrkörper axial nach oben gedrückt werden. Dabei werden die sechs Tellerfedern 21 zusammengedrückt. Die obere Dichtung 15 wird von dem kegelig-konkaven Dichtsitz 14 des Spindelgehäuses abgehoben und verlagert sich in radialer Richtung in den Innenraum 8 des Rohrabschnitts 2. Zwischen dem Dichtring 15 und dem gegenüberliegenden kegeligen Dichtsitz 14 des Spindelgehäuse 9 entsteht ein Spalt, der das Hindurchströmen von Medium aus dem Innenraum 8 des Rohres 2 in die Mündung der Querbohrung 19 hinein ermöglicht. Das Medium strömt durch die Querbohrung 19 in die axiale Bohrung 18 und durch deren untere Mündung nach außen.

Unterhalb der Mündung der axialen Bohrung 18 ist ein Adapterelement 24 angeordnet, welches ein Innengewinde 25 aufweist, in das auf bekannte Weise ein Außengewinde einer Probenahmeflasche (nicht dargestellt) eingeschraubt werden kann.

Während der Probeentnahme ist der von der Spindel 12 gebildete Absperrkörper jenseits der Mündung der Querbohrung 19 außen durch die zwei Dichtringe 16,17 nach außen abgedichtet. Diese Dichtringe 16,17 laufen bei der axialen Verschiebung des Absperrkörpers 12 in einem zylindrischen Abschnitt der Bohrung 13, so daß sie mit gleichbleibendem Druck anliegen und abdichten.

Wie in Fig. 1 zu erkennen, liegt der durch die Spindel 12 gebildete Absperrkörper im wesentlichen spielfrei in der Bohrung 13 und dem kegeligen Dichtsitz 14 des Spindelgehäuses 9. Die Armatur hat somit keinen Totraum, in dem sich Medium sammeln könnte. Bei der Probeentnahme wird somit immer frisches Medium aus dem Rohr 2 entnommen.

In Fig. 1 ist schließlich ein Mechanismus zu erkennen, mit dem die axiale Kraft zur Verlagerung der Spindel 12 aufgebracht wird. Über die zwei Sechskantmuttern 22 stützt sich in axialer Richtung ein Druckteil 26 über eine Unterlegscheibe 27 an der Spindel 12 ab. Das Druckteil 26 weist vier Gewindebohrungen 28 auf, in welche Gewindebolzen 29 eingeschraubt sind. An jedem Gewindebolzen 29 ist ein Griff 30 befestigt. Jeder Gewindebolzen 29 bildet einen radialen Arm, der ein schräges Langloch 31 eines die Spindel 12 umgebenden, im wesentlichen zylindermantelförmigen Drehgehäuses 32 durchragt.

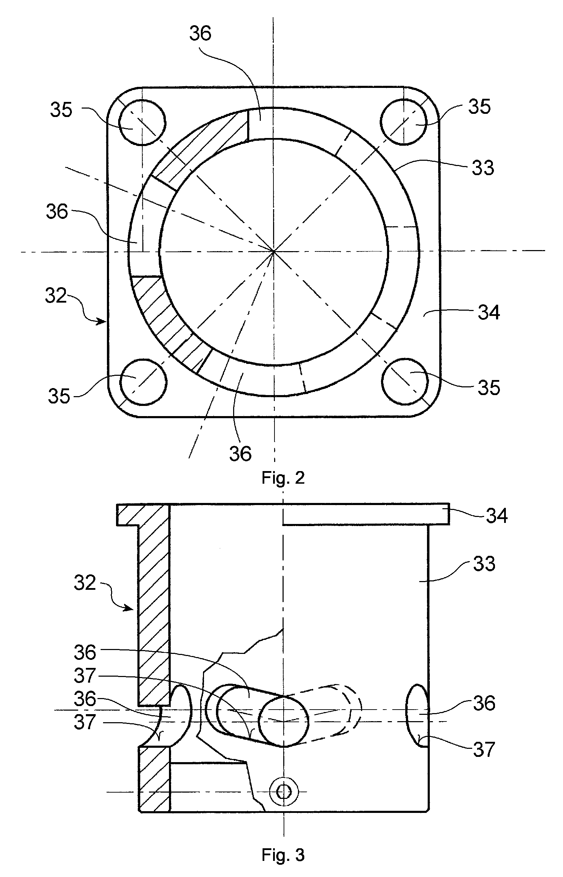

Das Drehgehäuse 32 ist in den Fig. 2 und 3 dargestellt. Es umfaßt einen zylindermantelförmigen Mantel 33 und einen Flanschabschnitt 34, in dem vier Bohrungen 35 zum Hindurchstecken von Befestigungsschrauben (nicht dargestellt) vorgesehen sind. Mit den Befestigungsschraubenwird das Drehgehäuse 32 gemeinsam mit dem Spindelgehäuse 9 an dem Flanschgehäuse 1 festgeschraubt.

Für die Aufnahme der Arme 29, die von den Gewindebolzen gebildet werden, weist der Mantelabschnitt 33 vier schräg zu einer radialen Ebene verlaufende Langlöcher 36 auf. Die unten liegenden Flächen dieser Langlöcher bilden Rampenflächen 37. Die Endabschnitte der schrägen Langlöcher bilden Endanschläge für die Bewegung der Arme 29 entlang der Rampenfläche 37. Beim Verdrehen der durch Griffe 30 und Gewindebolzen 29 gebildeten Arme um die Achse der Spindel werden die Gewindebolzen 29 durch die genannten Rampenflächen 37 zum Spindelgehäuse 9 hin gedrückt. Dabei drücken sie über die Unterlegscheibe 27 und die Sechskantmuttern 22 die Spindel 12 in Richtung des Innenraums 8 des Rohres 2. Hierdurch wird, wie oben beschrieben, ein zur Querbohrung 19 führender Strömungsquerschnitt im Bereich der Dichtung 15 geöffnet.

Beim Loslassen der Griffe 30 der Arme 29 drückt die Kraft der sechs Tellerfedern 21 die Spindel 12 wieder in ihre Schließstellung, wobei sich die Arme 29 in die tiefsten Positionen ihrer jeweiligen Rampenflächen 37 bewegen. Es ist somit ausgeschlossen, daß die Probenahmearmatur unbeabsichtigt geöffnet bleibt.

Um die leichtgängige Bewegung der Arme 29 in den Langlöchern 36 des Drehgehäuses 32 zu gewährleisten, sind auf den durch die Gewindebolzen 29 gebildeten Armen Laufbuchsen 38 angeordnet (siehe Fig. 1).

Bezugszeichenliste:
- 1: Flanschgehäuse
- 2: Rohr, Rohrabschnitt
- 3: Anschlußflansch
- 4: Schraubloch
- 5: Flanschfläche
- 6: Gewindebohrung
- 7: Öffnung
- 8: Innenraum
- 9: Spindelgehäuse
- 10: Vorsprung
- 11: Dichtring
- 12: Spindel
- 13: Bohrung
- 14: kegeliger Dichtsitz
- 15: Dichtring
- 16: Dichtring
- 17: Dichtring
- 18: axiale Bohrung
- 19: Querbohrung
- 20: Druckbuchse
- 21: Tellerfedern
- 22: Sechskantmuttern
- 23: Stirnfläche
- 24: Adapterelement
- 25: Innengewinde
- 26: Druckteil
- 27: Unterlegscheibe
- 28: Innengewinde
- 29: Arm, Gewindebolzen
- 30: Griff
- 31: Langloch
- 32: Drehgehäuse
- 33: Mantel
- 34: Flanschabschnitt
- 35: Loch
- 36: Langloch
- 37: Rampenfläche
- 38: Laufbuchse

## Patentansprüche

1. Probenahmevorrichtung, welche an einem fluidführenden Rohr (2) angeordnet ist und einen axial beweglichen Absperrkörper (12) aufweist, der in einer ersten Stellung das Rohr (2) dicht verschließt und in einer zweiten Stellung das Ausströmen von Fluid aus dem Rohr (2) durch eine Ausströmöffnung ermöglicht, **dadurch gekennzeichnet, daß** eine dem Innenraum (8) des Rohres (2) zugewandte Stirnfläche (23) des Absperrkörpers (12) in der Schließstellung mit der angrenzenden Oberfläche des Rohres (2) bündig verläuft.

2. Vorrichtung nach Anspruch 1, **dadurch gekennzeichnet, daß** der Absperrkörper (12) axial beweglich ist und mindestens eine Feder (21) den Absperrkörper (12) in die Schließstellung drückt, in der er eine Dichtung (15) in einen Dichtsitz (14) drückt

3. Vorrichtung nach Anspruch 2, **dadurch gekennzeichnet, daß** der Dichtsitz (14) außerhalb des Rohrquerschnitts liegt.

4. Vorrichtung nach einem der vorangehenden Ansprüche, **dadurch gekennzeichnet, daß** der Absperrkörper (12) sich nur auf einer Seite des Rohrquerschnitts (2) erstreckt.

5. Vorrichtung nach einem der vorangehenden Ansprüche, **dadurch gekennzeichnet, daß** der Absperrkörper (12) mittels eines Betätigungsmittels (29) axial von dem Dichtsitz (14) weg in eine Öffnungsstellung beweglich ist.

6. Vorrichtung nach Anspruch 5, **dadurch gekennzeichnet, daß** das Betätigungsmittel von der Rohrachse aus radial hinter dem Absperrkörper (12) angeordnet ist.

7. Vorrichtung nach einem der vorangehenden Ansprüche, **dadurch gekennzeichnet, daß** mindestens einen sich quer zum Absperrkörper (12) erstreckenden Arm (29) umfaßt, der auf einer schräg zur radialen Ebene des Absperrkörpers (12) verlaufenden Rampenfläche (27) geführt ist.

8. Vorrichtung nach Anspruch 7, **dadurch gekennzeichnet, daß** die Rampenfläche (27) zwei Endanschläge aufweist.

9. Vorrichtung nach Anspruch 7 oder 8, **dadurch gekennzeichnet, daß** die mindestens eine Feder eine axial auf den Absperrkörper (12) wirkende Tellerfeder (21) ist.

10. Vorrichtung nach einem der vorangehenden Ansprüche, **dadurch gekennzeichnet, daß** die Ausströmöffnung durch die Mündung einer axialen Bohrung (18) in dem Absperrkörper (12) gebildet wird.

11. Vorrichtung nach einem der vorangehenden Ansprüche, **dadurch gekennzeichnet, daß** die axiale Bohrung (18) des Absperrkörpers (12) mit einer Querbohrung (19) verbunden ist, welche an der Umfangsfläche des Absperrkörpers (12) mündet, wobei die Dichtung (15) zwischen der Mündung der Querbohrung (19) und der dem Innenraum (8) des Rohres (2) zugewandten Stirnfläche (23) des Absperrkörpers (12) angeordnet ist.

12. Vorrichtung nach Anspruch 11, **dadurch gekennzeichnet, daß** der Absperrkörper (12) im Bereich der Dichtung (15) eine schräg verlaufende Umfangsfläche aufweist.

13. Vorrichtung nach einem der vorangehenden Ansprüche, **dadurch gekennzeichnet, daß** auf der von dem Rohrinnenraum (8) abgewandten Seite der Mündung der Querbohrung (19) mindestens eine weitere Dichtung am Umfang des Absperrkörpers (12) angeordnet ist.

14. Vorrichtung nach einem der vorangehenden Ansprüche, **dadurch gekennzeichnet, daß** im Bereich der Ausströmöffnung ein Gewinde (25) zum Aufschrauben eines komplementären Gewindeabschnitts eines Entnahmebehälters angeordnet ist.
